# EUROPEAN PATENT APPLICATION

(11) **EP 4 009 257 A1**
(43) Date of publication of application: **08.06.2022**
(21) Application number: 21150342.0
(22) Date of filing: 05.01.2021
(51) Int. Cl.: G06Q 10/08

(54) **SYSTEM AND METHOD TO GUARANTEE THE AUTHENTICITY AND OWNERSHIP OF AN ITEM**

(30) Priority: 02.12.2020 IT 202000029531
(71) Applicant: Themis S.r.l., 25021 Bagnolo Mella (BS) (IT)
(72) Inventor: Beldrighi, Graziano, 25021 BAGNOLO MELLA (IT); Molinari, Matteo, 25021 BAGNOLO MELLA (IT)
(74) Representative: Leganza, Alessandro

(57) **Abstract**

The present invention belongs to the field of systems and methods based both on information technologies and on physical objects and steps that allow the traceability and to guarantee the ownership and / or authenticity of a movable property.

## Description

### Technical Field

The present invention belongs to the field of systems and methods based both on information technologies and on physical objects and steps that allow the traceability and to guarantee the ownership and / or authenticity of a movable property.

### State of the art

Consumers have always felt the need to have guarantees on the authenticity of the items they purchased and, in particular, the need to know whether certain products are counterfeit or not, or are copies not authorized by the Originator, of authentic items.

The problem of authenticity is particularly felt especially for luxury goods or works of art, where the ability of counterfeiters is such as to manufacture products that are substantially similar, at least in aesthetic terms, to the original ones. However, the difference between the original product and the copied or counterfeit product is marked by strong differences in terms of product value.

Nowadays blockchain technologies are being developed to allow secure transactions, such as banking transactions. However, taken as such, they do not solve the problem of guaranteeing the authenticity of movable properties.

Furthermore, nowadays, a user, for example an art collector, wants to know which had been the transfers of ownership that had involved his property before it ended up in his hands.

Therefore, among users or consumers, the need is felt to know who owned an item before purchase, which often guarantees the authenticity of the item itself and/or it is a useful mean of obtaining guarantees on the authenticity of an item and/or to ensure the transparency and legitimacy of the transaction since the seller is the real owner of the movable property (2), thus excluding stolen and/or counterfeit goods.

Talbot Phillip's AU2018100150A4 discloses a method that provides irrefutable proof of the delivery of goods or services in accordance with a contract between a buyer and seller. When the buyer places an order over the Internet with seller by digitally signing an order, the Smart Contract Server advises seller of the order and registers the first QR code image with delivery status Ordered (State 1) on the Blockchain. When the goods are ready to ship, the seller digitally signs that the goods are ready to ship, and the Smart Contract Server registers the second QR code image with a Ready to ship (State 2) on the Blockchain. A delivery driver then arrives to pick up the physical goods and using the camera on his mobile device, scans the seller mobile device screen which contains the second QR code image. The Smart Contract Server verifies the scan as valid and return if scan is valid or not, if valid, the delivery driver then digitally signs that the goods have been picked up with an installed digital signing application from his mobile device. Then the Smart Contract Server registers the third QR code image with a Picked Up (State 3) on the Blockchain. The delivery driver then delivers the goods to the buyer and digitally signs the delivery as delivered. The Smart Contract Server registers the fourth QR code image with a Delivered (State 4) on the Blockchain. The final step is for the buyer to scan the delivery driver mobile device screen which contains the fourth QR code image (State 4) using the camera on their mobile device. Then the Smart Contract Server verifies the scan as valid and return if scan is valid or not, if valid, the buyer confirms that all the goods have been received and digitally signs with an installed digital signing application from their mobile device. The Smart Contract Server registers the fifth QR code image with a Signed Received (State 5) on the Blockchain [0033-0037].

US2018096175 by Colson Shay C. et al. discloses a distributed manufacturing platform and related techniques that connect designers, manufacturers, shippers and other entities and simplify the process of manufacturing and supplying products. A distributed ledger or blockchain may be used to record transactions, execute smart contracts and perform other operations to increase transparency and integrity of supply chain. Blockchain enabled packaging can be used to track movement and conditions of packages from manufacture, through transit, to delivery (for example, by scanning a barcode, QR code, or other machine-readable code).

### Summary of the invention

The problem addressed by the present invention is therefore that of providing a system and a method that allows to solve, at the same time, all the aforementioned problems, or that allows the tracing and/or to guarantee the property and/or the authenticity of movable properties (2) effectively solving all the situations listed above.

Therefore, the present invention solves the aforementioned problem by means of the system (1) and the methods of use as outlined in the annexed claims, whose definitions are integral part of the present description, thus allowing to have a system and methods that also allow you to identify copied and/or counterfeit products, as well as to recognize original products.

Moreover, as an additional advantage, the proposed solution consists of a system of relatively simple establishment.

Further characteristics and advantages of the system (1) of the invention and of the methods of use will result from the description of examples of realization of the invention, provided as an indication of the invention.

### Detailed description of the invention

For purposes of the description of this document, the term "and / or", when used in a listing of two or more items, means that any of the items listed can be used alone, or in any combination of two or more of the items listed.

For example, if a combination is described as containing either components A, B and / or C, or, A and / or B and / or C, the composition may contain only A; only B; only C; A and B in combination; A and C in combination; B and C in combination; or A, B and C in combination.

The terms "comprise", "comprising" or any other variation thereof, are intended to cover a non-exclusive inclusion, such that a system, method, use, etc. which includes a list of elements does not include only those elements but may include other elements not expressly listed or inherent to that system, method, use, etc.

An element followed by "comprises... a..." does not prevent, without further constraints, the existence of further identical elements in the system, method or use comprising the element.

An object of the present invention is a system (1) for tracking and / or to guarantee the ownership and / or authenticity of movable property (2) comprising or, alternatively, consisting of:
- a label (3) comprising a code (4),
- a reading system (5) of said label (3) suitable for transmitting and / or connecting said code (4), through a web network or other similar system, to a data storage system (6),
- a data storage system (6) comprising:
   - a list of codes (7) associated with said movable property (2),
   - a list of owners of movable properties (8) and / or a list of certificates of authenticity (9) of said movable properties;
where each code (4) of the code list (7) corresponds to a movable property (2) and to one or more owners of said movable property and / or to a certificate of authenticity of said movable property (2).

It was in fact surprisingly found that the system (1) of the invention allows not only to track the movements of the movable property, but also to effectively guarantee its ownership and / or authenticity.

The system (1) for tracing and / or to guarantee the ownership and / or authenticity of movable properties (2) may also be used to guarantee and / or to inform about the ownership and / or possession and / or loan for use and / or rental and / or leasing and / or rent to buy and / or loan with the right of redemption, handling, sale and lease back, to ensure that the item has not been stolen, as pledge of movable properties (2).

The system (1) is suitable to connect the information about authenticity and / or ownership of the item stored in a data storage system (6) also based on the use of the blockchain or other similar system by reading the code (4) of the label (3), thus connecting the data storage system (6) information to the movable property (2), then the passage from the label (3) with the code (4) to the movable property (2).

Movable properties (2) are referred to movable properties in general, such as, for example, luxury goods, clothing, shoes, watches, stickers, works of art, paintings, sculptures, design works, vehicles, jewels, telephones, smartphones, accessories, electronic devices in general, etc.

According to a preferred embodiment, the system (1) is suitable of tracing and / or guaranteeing the ownership and / or authenticity of movable properties (2) where said movable properties are selected among luxury goods, clothing, shoes, watches, stickers, works of art, paintings, sculptures, design works, vehicles, jewels, telephones, smartphones, accessories, electronic devices in general, etc.

The system (1) of the invention can further comprise d) a web network or other similar system suitable of transmitting and / or connecting said code (4) to a data storage system (6).

The system (1) of the invention further comprises e) a software and / or an App designed to manage and / or to connect the different parts of the system (1).

The web network or other similar system may be a web network or other similar system protected by cryptography.

According to an embodiment, the label (3) may comprise an NFC (Near Field Communication) transmitter / receiver.

According to a more preferred embodiment, the label (3) may be an adhesive label that comprises a button connected to a communication system, where at least the button is arranged on part of the adhesive surface of the adhesive label. In this way, when the adhesive label (2) is detached from the movable property (2), the button will be released causing the emission of a signal by the communication system which is sent to the data storage system (6) which registers the tampering of the adhesive label.

According to a preferred embodiment of the system (1) the label (3) is an adhesive label, a sewed label, a glued label, a printed, varnished or painted or fire branded or stamped with encryption ink label, or it is a tag.

According to an embodiment of the system (1) the label (3) is a self-destructing label.

According to an embodiment of the system (1) the label (3) is a self-destructing adhesive label.

According to a preferred embodiment of the system (1) the label (3) is a self-destructing label, such as adhesive label, sewed label, a glued label, a printed, varnished or painted or fire branded or stamped with encryption ink label, or a self-destructing tag.

The label (3) comprises a code (4), where the code (4) is a unique identification code. This code (4) may therefore be a one-dimensional and / or two-dimensional and / or alphanumeric code, such as a QR-code, an alphanumeric code, a matrix code, a bar code; and / or it is a code made by encryption ink; or it is a code created by fire branding or it is any other code suitable of uniquely identifying a product or article.

According to a preferred embodiment of the system (1) the code (4) is a code made by encryption ink such as QR-code, alphanumeric code, matrix code or bar code.

According to a more preferred embodiment of the system (1) the code (4) is a code made by encryption ink of the QR-code type.

The code (4), further of being present on the label or in the label (3), is also present in a data storage system (6).

The label (3), in addition to the code (4), may further comprise an NFC transmitter / receiver adapted to transmit to a reading system (5) suitable of receiving NFC information, in particular, suitable of receiving the code (4).

The reading system (5) may be a mobile device, suitable of receiving NFC information, such as for example a Tablet, a Smartphone or iPhone, preferably it is a smartphone.

If the reading system (5) is a mobile device, the information about tracking and / or ownership and / or guaranty of authenticity retrieved by the data storage system (6) may be directly displayed on said mobile device, when it is placed in the proximity of the movable property.

Therefore, for example, the user may place the mobile device in the proximity of the label (3) placed on the movable property (2), the label will transmit the code (4) via NFC to the mobile device and, through the code (4), the mobile device, by transmitting and / or connecting to the data storage system (6), will show information about the tracking and / or ownership and / or guarantee of authenticity of said movable property (2).

For example, it will be sufficient to place the mobile device, for example the Smartphone, near a painting to know, through the system (1) of the invention, who is the owner of said painting and / or if it is equipped with authenticity certificate. Otherwise, it will be sufficient to place the mobile device, such as the Smartphone, near a pair of branded shoes to know, through the system (1) of the invention, if they are authentic.

The reading system (5) of said label (3) suitable for transmitting and / or connecting said code (4), through a web network or other similar system, to a data storage system (6), may be a code reader, such as either a laser scanner or an NFC reader or receiver.

The reading system (5) may be a mobile device, suitable for reading codes, for example bar codes, QR-Codes, matrix codes, such as a Tablet, and may be for example a Smartphone or iPhone, preferably it is a smartphone.

The data storage system (6) may be either the internal memory or the Hard-Disc of a server, a computer, a mobile device, a PC, etc.

The data storage system (6) may also be part of a computer platform, hereinafter referred to as a platform.

Preferably, the data storage system (6) is a blockchain data storage system.

Preferably the data storage system (6) is part of a blockchain platform. More preferably, this data storage system (6) is of the closed central or smart-lock type.

Said data storage system (6) allows anyone to access and find the information regarding that specific movable property (2).

The data storage system (6) comprises one or more records, each record comprising at least two of the following fields:
- code (4), and / or
- owner of the movable property (2), and / or
- authenticity certificate.

The platform may be a web platform, and / or an auxiliary system applicable through API (application programming interface) to third-party sites or plug-ins to platforms, e-commerce or other online activities that have as their object the sale (or other exchange of ownership) of movable properties.

Said information comprises the property rights and, above all, the certification of authenticity of the product.

The list of owners of movable properties (8) comprises the name of the owners of said items. The owners, natural or legal persons, are those who hold the ownership rights of the movable property.

The certificate of authenticity can be issued by the manufacturer of the movable property.

Alternatively, the certificate of authenticity may be acquired through one or more techniques chosen from:
- 3D laser or infrared scanning, other machineries or such as to detect the shape of the movable property, including its components, and to compare it with that of the original movable property;
- IR, FT-IR or UV-Vis spectrophotometry, headspace gas chromatography, to compare the nature of the material, the color, etc. of the movable property (2) with that of the original product;
- organoleptic analysis (tactile, olfactory, visual).

The system (1) therefore makes it possible to guarantee and certify the authenticity of products and to prevent counterfeiting through a constantly updated data storage system (6) available for consultation to anyone who allows, in total transparency, to verify the current owner and / or user of the movable property (2), the certificate of authenticity and / or any work on certification carried out to authenticate or to guarantee the authenticity of the movable property (2), as described above .

The establishment of the authenticity of an item through the use of one or more of the techniques listed above is particularly useful in the case of re-sale of an item, or, in the case of sale of the item, not by the Originator but by third parties.

This invention guarantees that a certificate of authenticity can be uniquely combined with a product without the possibility of such certificate being exchanged.

Through the blockchain system it is possible to create a platform that allows to manage the transfer of ownership of the item. The blockchain is in fact suitable for containing unique information about the item.

Another object is a method for tracing and / or to guarantee the ownership and / or authenticity of movable properties (2) through the system (1) described above, comprising or, alternatively, consisting of the following steps:
a) to generate in the data storage system (6) a record comprising:
   - a code (4) associated with a movable property (2),
   - related information and one or more owners of the movable property (2) and / or the certificate of authenticity of the movable property (2),
   where each code (4) corresponds to a movable property (2) and one or more owners of said movable property and / or a certificate of authenticity of said movable property;
b) to generate a label (3) including the code (4) of step a),
c) to apply the label (3) of step b) on the movable property (2),
d) to transmit said code (4), by means of a reading system (5) of said label (3), through a web network or another similar system, to a data storage system (6),
e) the data storage system (6) returns the tracking and / or ownership and / or certificate of authenticity of the movable property (2).

Step b) may be achieved by printing, including or stamping the code (4) in or on the label (3) and / or on the movable property (2).

With regard to the transfer of ownership we consider for example the situation in which the movable property (2) is owned by the Owner and he wants to sell it to the buyer. The buyer will send on the platform a purchase proposal to the Owner or vice versa), if accepted by the Owner, he will send the item to the Buyer while the money is kept by the platform as a trust deposit. Once the item is received, the Buyer will frame the code or will insert it in the data storage system (6), by doing so the platform manages, manually or automatically, the transfer of information about the ownership of the item (Smart Contract) and, if chosen, also the transfer of money to the Owner.

Therefore, according to an embodiment, the aforementioned method may comprise the following further steps to manage the transfer of ownership from owner X to future owner Y:
f) future owner Y sends a purchase proposal to owner X or owner X sends a sale offer to future owner Y,
g) optionally, if the purchase proposal or the sale offer is respectively accepted by owner X or by the future owner Y, the future owner Y will pay the equivalent amount in cash (or cryptocurrencies, or barter, exchange of goods for bonds or any other form of economic exchange or free-contract) in the platform and / or in the plug-in as a trust deposit and / or double sale, and / or sale with reserved domain agreement, loan for use, rental and / or leasing and / or rent to buy, franchising or any other type of contract also concluded with smart contract methods,
h) if the purchase proposal or the sale offer is respectively accepted by owner X or by the future owner Y, owner X will send the movable property (2) comprising the label (3) comprising a code (4), to the future owner Y,
i) once received the movable property (2), the future owner Y, by means of a reading system (5) of said label (3), will transmit said code (4), through a web network or other similar system, to the data storage system (6),
j) the data storage system (6) is then updated, manually or automatically, with regard to the transfer of ownership of the property from owner X to owner Y;
k) optionally, the platform releases to owner X the money which, by a trust deposit and / or double sale, and / or sale with reserved title agreement, loan for use, rental and / or leasing and / o rent to buy, franchising or any other type of contract concluded also with smart contract mode, the future owner Y had paid in the platform and / or in the plug-in.

The certificate of authenticity can take place through 3D laser scanning, or other techniques mentioned above.

Therefore, according to another embodiment, the method may include one or more of the following steps which precede step a):
a01) to perform a three-dimensional scan of the movable property (2) and to compare it with the three-dimensional scan of the product considered authentic, and / or
a02) to perform an organoleptic analysis of the materials of the movable property (2) and to compare the results with those of the product considered authentic, and / or
a03) to perform a chemical analysis of the materials of the movable property (2) and to compare the results with those of the product considered authentic,
a04) if the results of one or more of the investigations carried out in any of the steps from a01) to a03) give a positive feedback, to proceed with step a).

Said steps in fact allow to establish and therefore to guarantee the authenticity of an item.

These further steps are particularly useful if the mobile property (2) is the object of a re-sale or a transfer of ownership of the item (2) between two third parties and no longer from the Originator to the first third party.

According to a preferred embodiment, the three-dimensional scanning of step a01) is performed by means of laser scanning devices integrated in smartphones (for example in iPhone 12) or other mobile or stationary devices.

Said other mobile or stationary devices may also belong to third parties whose information and analysis may still constitute the output of step a01).

According to a preferred embodiment of the above method, the chemical analysis of step a03) is carried out by FT-IR spectrophotometry, ATR spectrophotometry, headspace gas chromatographic analysis, TGA thermal analysis (thermogravimetry), DSC thermal analysis (differential scanning calorimetry).

According to a preferred embodiment of the aforementioned method, the organoleptic analysis is performed by visual and / or olfactory and / or tactile analysis.

Another object, is the use of a system (1) as described above, including preferred embodiments, to guarantee the ownership of movable properties (2) or to guarantee the ownership and authenticity of movable properties (2).

Finally, another object is the use of a label (3) comprising a code (4) to guarantee the ownership or the ownership and authenticity of movable properties (2).

According to a preferred embodiment, the use of the system (1) is preferred to guarantee and / or to inform about the ownership and / or possession and / or the loan for use and / or rental and / or leasing and / or rent to buy and / or loan with the right of redemption, handling, sale and lease back, to ensure that the item has not been stolen, as pledge of movable properties (2).

From the above description the advantages of the system (1) of the present invention are evident, which, although its relatively simple realization, solves many problems simultaneously, with one and only one system.

According to an embodiment, the label (3) comprising a code (4) may be an integral part of the movable property (2), for example, it may be made by molding the movable property (2), or, by imprinting on the movable property (2).

According to another embodiment, the label (3) comprising a code (4) may be contained inside the movable property (2).

## Claims

1. System (1) for tracing and / or to guarantee the ownership and / or authenticity of movable properties (2) comprising or, alternatively, consisting of:
a) a label (3) comprising a code (4),
b) a reading system (5) of said label (3) suitable for transmitting and / or connecting said code (4), through a web network or other similar system, to a data storage system (6),
c) a data storage system (6) comprising:
- a list of codes (7) associated with said movable properties (2),
- a list of owners of movable properties (8) and / or a list of certificates of authenticity (9) of said movable properties;
where each code (4) of the code list (7) corresponds to a movable property (2) and to one or more owners of said movable property and / or to a certificate of authenticity of said movable properties (2).

2. System (1) according to claim 1, wherein the label (3) is an adhesive label, a sewed label, a glued label, a printed, varnished or painted or fire branded or stamped with encryption ink label, or it is a tag.

3. System (1) according to claim 2, wherein the label (3) is an adhesive label that comprises a button connected to a communication system, where at least the button is arranged on part of the adhesive surface of the adhesive label.

4. System (1) according to any one of claims 1 to 3, wherein the code (4) is a QR-code, an alphanumeric code, a matrix code, a bar code; and / or it is a code made by encryption ink; or it is a code created by fire branding or it is any other code suitable of uniquely identifying a product or article.

5. System (1) according to any one of claims 1 to 4, suitable for tracing and / or guaranteeing the ownership and / or authenticity of movable properties (2) where said movable properties are selected from luxury goods, clothing, shoes, watches, stickers, works of art, paintings, sculptures, design works, vehicles, jewels, telephones, smartphones, accessories, electronic devices in general.

6. Method for tracing and / or to garantee the ownership and / or authenticity of movable properties (2) through the system (1) according to any one of claims 1 to 5 comprising or, alternatively, consisting of the following steps:
a) to generate in the data storage system (6) a record comprising:
- a code (4) associated with a movable property (2),
- related information and one or more owners of the movable property (2) and / or the certificate of authenticity of the movable property (2),
where each code (4) corresponds to a movable property (2) and one or more owners of said movable property and / or a certificate of authenticity of said movable property;
b) to generate a label (3) including the code (4) of step a),
c) to apply the label (3) of step b) on the movable property (2),
d) to transmit said code (4) by means of a reading system (5) of said label (3), through a web network or other similar system, to a data storage system (6),
e) the data storage system (6) returns the tracking and / or ownership and / or certificate of authenticity of the movable property (2).

7. Method according to claim 6 comprising the following further steps to manage the transfer of ownership from owner X to future owner Y:
f) future owner Y sends a purchase proposal to owner X or owner X sends a sale offer to future owner Y,
g) optionally, if the purchase proposal or the sale offer is respectively accepted by owner X or by future owner Y, the future owner Y will pay the equivalent amount in cash in the platform and / or in the plug-in as a trust deposit.
h) if the purchase proposal or the sale offer is respectively accepted by owner X or by future owner Y, owner X will send the movable property (2) comprising the label (3) comprising a code (4), to the future owner Y,
i) once received the movable property (2), the future owner Y, by means of a reading system (5) of said label (3), will transmit said code (4), through a web network or other similar system, to the data storage system (6),
j) the data storage system (6) is then updated, manually or automatically, with regard to the transfer of ownership of the property from owner X to owner Y;
k) optionally, the platform releases to owner X the money which, by a trust deposit, the future owner Y had paid in the platform and / or in the plug-in.

8. Method according to any one of claims 6 to 7, comprising one or more of the following steps which precede step a):
a01) to perform a three-dimensional scan of the movable property (2) and to compare it with the three-dimensional scan of the product considered authentic, and / or
a02) to perform an organoleptic analysis of the materials of the movable property (2) and
to compare the results with those of the product considered authentic, and / or
a03) to perform a chemical analysis of the materials of the movable property (2) and to compare the results with those of the product considered authentic,
a04) if the results of one or more of the investigations carried out in any of the steps from a01) to a03) give positive feedback, to proceed with step a).

9. Method according to claim 8, wherein the three-dimensional scanning of step a01) is performed by means of laser scanning devices integrated in smartphones or other mobile or stationary devices.

10. Method according to any one of claims 8 to 9, where the chemical analysis of step a03) is carried out by FT-IR spectrophotometry, ATR spectrophotometry, headspace gas chromatographic analysis, TGA thermal analysis (thermogravimetry), DSC thermal analysis (differential scanning calorimetry).

11. Use of a system (1) according to any of the claims 1 to 5 to guarantee the ownership of movable properties (2) or to guarantee the ownership and authenticity of movable properties (2).

12. Use of a system (1) according to any of the claims 1 to 5 to guarantee and / or to inform about the ownership and / or possession and / or the loan for use and / or rental and / or leasing and / or rent to buy and / or loan with the right of redemption and / or to ensure that the item has not been stolen and / or as pledge of movable properties (2).
